**Europäisches Patentamt**

**European Patent Office**

**Office européen des brevets**

(19)

(11) Veröffentlichungsnummer: **0 121 075 B1**

# EUROPÄISCHE PATENTSCHRIFT

(12)

(45) Veröffentlichungstag der Patentschrift:
14.09.88

(51) Int. Cl.⁴: **B 62 B 3/10**

(21) Anmeldenummer: **84101748.6**

(22) Anmeldetag: **20.02.84**

(54) Reinigungswagen.

(30) Priorität: 05.03.83 DE 8306405 U

(43) Veröffentlichungstag der Anmeldung:
10.10.84 Patentblatt 84/41

(45) Bekanntmachung des Hinweises auf die Patenterteilung:
14.09.88 Patentblatt 88/37

(84) Benannte Vertragsstaaten:
AT BE CH DE FR GB IT LI LU NL SE

(56) Entgegenhaltungen:
EP - A - 0 062 566
DE - A - 2 620 957
DE - A - 3 021 098
FR - A - 2 292 617
GB - A - 2 106 051

(73) Patentinhaber: Salmon GmbH & Co. Vermietungs- und Verpachtungs KG, Kiesweg 4-6, D-6980 Wertheim2 (DE)

(72) Erfinder: Salmon, Heinz, Georg-Feuerstein-Strasse 3, D-6980 Wertheim (DE)

(74) Vertreter: Keil, Rainer A., Dipl.-Phys. Dr. et al, KEIL & SCHAAFHAUSEN Patentanwälte Eysseneckstrasse 31, D-6000 Frankfurt am Main 1 (DE)

ACTORUM AG

## Beschreibung

Die Erfindung bezieht sich auf einen Reinigungswagen mit einem z.B. mit Lenkrollen versehenen Rahmengestell mit zwei im Abstand voneinander angeordneten Holmen für daran auswechselbar zu befestigende Stütz- oder Tragteile, wie Drahtkörbe, Bügel, Roste, Halterahmen u.dgl., mit einer Pressenhalterung zwischen den beiden Holmen, die oberhab eines für die Aufnahme von wenigstens einem Eimer bestimmten Halterahmens angeordnet ist, sowie mit einer die beiden Holme verbindenden oberen Querstange, vorzugsweise aus rundem Stahlrohr, für das Einhängen der Presse und einer die beiden Holme verbindenden unteren Querstange als Gegenlager für die Abstützung der Presse.

Bei Reinigungswagen dieser Art besteht das Problem einer sicheren, austauschbaren und stabilen Anlenkung verschiedener Pressen für das Ausdrücken von Nasswischmops u.dgl. Hierbei ist zu berücksichtigen, dass nicht nur das Eigengewicht der Presse aufzunehmen ist, sondern dass die eigentliche Beanspruchung des Rahmengestells dann auftritt, wenn die Presse von der Bedienungsperson mittels eines Betätigungsarmes betätigt wird. Dann wirken Kräfte auf die Presse und damit den Reinigungswagen ein, die in der Grössenordnung des Gewichtes der Bedienungsperson liegen. Hierdurch kann nicht nur die Halterung der Presse an dem Reinigungswagen leiden, sondern selbst der Rahmen- und Holmenaufbau des Rahmens kann sich verformen. Es muss also dafür gesorgt werden, dass die während der Betätigung der Presse entstehenden erheblichen Kräfte in geeigneter Weise in die Rahmenkonstruktion eingeleitet werden, um ein Verformen oder Kippen des Reinigungswagens zu vermeiden.

Die EP-A-0 062 566 zeigt einen Klapprahmen, bei welchem die Holme im abgeklappten Zustand unter einem Winkel zur Horizontalen stehen. Die Holme sind ferner gelenkig mit einem Grundrahmen über Schrägstreben verbunden. Unter Berücksichtigung der genannten Kräfte, die bei Betätigung einer Moppresse entstehen, führt dies bei den üblichen Materialstärken für Holmen und Streben zwangsläufig zu einer Verformung derselben und zu einer Beeinträchtigung der Gelenke. Die Kräfte stehen zudem schräg zur Holmenlängsachse, so dass bei unzureichender Materialstärke mit einem Verbiegen oder gar Abknicken der Schrägholme zu rechnen ist. Wollte man die Holme und Streben so stark ausbilden, dass die entstehenden Kräfte aufgenommen werden können, würde der Reinigungswagen verhältnismässig schwer und teuer, was unerwünscht ist.

Bei dem Reinigungswagen nach der GB-A-2 106 051, welche am 7. April 1983 veröffentlicht wurde, sind einfache senkrechte Säulen auf einem Grundrahmen vorgesehen. In welcher Weise eine Moppresse an einer oberen Querstange befestigt werden soll, ist nicht ersichtlich. Die Säulen sind jedenfalls bei üblicher Materialstärke gegenüber dem Grundrahmen nicht verwindungssteif genug, um die bei einer Pressenbetätigung auftretenden erheblichen Kräfte aufnehmen zu können. Die Säulen werden sich gegenüber dem Grundrahmen in sich verformen und schrägstellen, auch wenn diese durch dünne Schrägstreben abgestützt sind. Zudem besteht bei diesem Reinigungswagen bei Betätigung der Presse, die durch Krafteinwirkung von oben auf einen schrägstehenden Hebel erfolgt, Kippgefahr.

Bei dem Reinigungswagen nach der DE-A-26 20 957 ist die Presse in einen mit Hilfe eines an dem Rahmen angeordneten senkrechten Zapfens rundum schwenkbaren Bügel einhängbar. Hierbei handelt es sich jedoch um einen verhältnismässig kompakten niedrigen Reinigungswagen, der nur für die Aufnahme zweier rechteckiger Eimer bestimmt und geeignet ist. Die Möglichkeit, Drahtkörbe, andere Bügel, Roste und Halterahmen aufzunehmen, ist nicht gegeben.

Hiervon ausgehend ist es Aufgabe der vorliegenden Erfindung, einen vielseitig einsetzbaren Reinigungswagen der eingangs genannten Art mit einer sicheren und austauschbaren Anlenkung verschiedener Pressen für das Ausdrücken von Nasswischmops u.dgl. zu schaffen.

Diese Aufgabe wird dadurch gelöst, dass die Holme im wesentlichen senkrecht angeordnet und U-förmig mit nach oben weisender Krümmung ausgebildet sind und dass die Schenkel der Holme jeweils in Abständen durch Querstreben miteinander verbunden sind.

Die erfindungsgemässe Lösung setzt sich also aus mehreren Merkmalen zusammen, welche sämtliche zum Erfolg vielseitiger Einsetzbarkeit und dauerhafter Stabilität des Reinigungswagens beitragen. Die Holme sind U-förmig, wodurch schon eine erhebliche Versteifung und breite Abstützung der Holme auf dem Rahmengestell gewährleistet ist. Die Holme sind darüber hinaus jeweils durch mindestens zwei Querstangen miteinander verbunden, was zu einer grösseren Belastbarkeit und einer Versteifung der Holme gegeneinander führt. Die Querstangen haben einen solchen Abstand voneinander, dass sich die in die obere Querstange eingehängte Presse an der unteren Querstange abstützen kann. Dadurch ist eine sichere und austauschbare Lagerung der Presse an den Holmen gewährleistet. Die Holme sind im wesentlichen senkrecht zum Rahmengestell angeordnet, so dass die Beanspruchung der Holme überwiegend in Längsrichtung ihrer Schenkel erfolgt und dadurch ein Verbiegen bzw. Abknicken der Schenkel vermieden ist. Darüber hinaus sind die Schenkel der jeweiligen Holme in Abständen durch Querstreben miteinander verbunden. Hierdurch wird eine Versteifung der Holme in sich bewirkt, so dass auch die bei Betätigung der Presse auftretenden senkrecht zu den Schenkeln einlaufenden Kräfte aufgenommen werden können, ohne dass sich die Schenkel verbiegen. Hierdurch kann die gesamte Rahmenkonstruktion bei Betätigung der Presse auftretenden Kräften dauerhaft standhalten. Die die Schenkel der Holme miteinander verbindenden Querstreben können – ausser zur Absteifung der Holmenschenkel – in einfacher Weise für die auswechselbare Befestigung der übrigen Stütz- und Tragteile benutzt werden, die dann ebenfalls verhältnismässig hoch belastet werden können, ohne dass es zu einer Verformung der Rahmenkonstruktion des auf diese Weise vielseitig einsetzbaren Reinigungswagens kommt. Die untere Querstange besteht vorzugsweise aus vierkantigem Stahlrohr. Hierdurch wird erreicht, dass einerseits wegen des runden Stahlrohrs die Presse eine beliebige Winkellage auf der oberen Querstange einnehmen kann, andererseits aber die untere Querstange aufgrund ihrer Ausbildung als vierkantiges Stahlrohr eine verhältnismässig breite Abstützfläche darbietet.

Es kann ferner vorgesehen sein, dass die einander zugeordneten Enden der Querstangen im Abstand voneinander jeweils an einem gemeinsamen, vorzugsweise als Flachmaterialstreifen ausgebildeten Verbindungsstück angebracht, vorzugsweise angeschweisst sind. Hierdurch wird eine zusätzliche Versteifung und günstige Krafteinleitung in den Holmenbereich erzielt, da sich die Kräfte über die Gesamtlänge des Verbindungsstücks verteilen. Ausserdem bildet diese besondere Ausgestaltung der Erfindung die Möglichkeit eines einfachen nachträglichen Anbaus der Pressenhalterung. Der nachträgliche Anbau wird, ohne dass die zuvor erzielten Versteifungsfunktionen leiden, noch weiter erleichtert und dabei die Versteifungsfunktion sogar noch gefördert, wenn die Querstreben noch einmal gegeneinander mittels des Verbindungsstücks abgestützt werden.

Die jeweiligen Verbindungsstücke weisen vorzugsweise Löcher für das Festschrauben an den Holmen bzw. mit diesen verbundenen Querstreben auf. Dabei sind in den jeweiligen Verbindungsstücken zweckmässigerweise wenigstens zwei Löcher im Abstand der Querstreben der Holme vorgesehen, so dass nach der Montage ein Kippen oder Schwenken der Pressenhalterung an dem Rahmengestell ausgeschlossen ist.

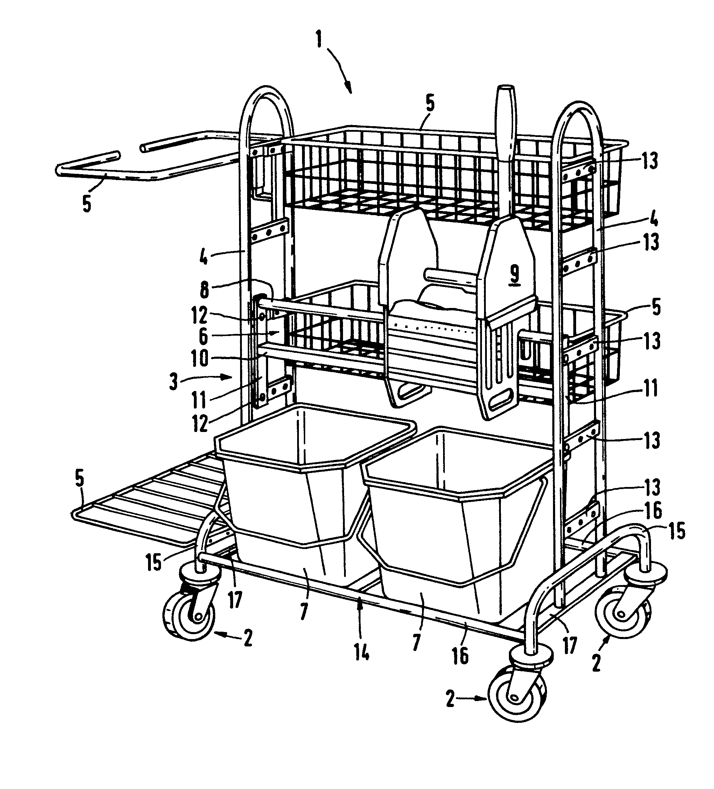

Nachfolgend wird ein Ausführungsbeispiel der Erfindung anhand der Zeichnung näher erläutert.

Die einzige Figur veranschaulicht in Schrägansicht einen die Erfindung aufweisenden Reinigungswagen.

Der Reinigungswagen 1 mit einem Rahmengestell 3 hat einen unteren Halterahmen 14. An zwei einander gegenüberliegenden Enden des Halterahmens 4 ist je ein Bügel 15 mit senkrecht nach unten gebogenen Enden angeschweisst. In die nach unten weisenden Öffnungen der Bügel 15 ist je eine Lenkrolle 2 eingesteckt. Parallel zu den Bügeln 15 und nach innen versetzt weist der Halterahmen 14 Längsholme 16 an ihren Enden verbindende Flacheisen 17 auf, auf welchen U-förmige Holme 4 mit nach oben weisender Krümmung aufgesetzt sind. Die beiden Schenkel der Holme 4 sind jeweils in Abständen durch Querstreben 13 miteinander verbunden. Diese dienen der Anbringung von Stütz- oder Tragteilen 5, wie Drahtkörbe, Bügel, Roste u.dgl. für die Aufnahme von Putzzeug, Putztüchern, Reinigungsgeräten, Gerätehalter sowie Kanister, Flaschen und Dosen mit Putz- und Reinigungsmitteln u.dgl.

Auf einem (nicht sichtbaren) Gitterwerk des Halterahmens 14 sind nebeneinander zwei Eimer 7 für die Aufnahme von Brauchwasser und Frischwasser aufgestellt. Oberhalb der Eimer 7 ist zwischen den Holmen 4 eine Pressenhalterung 6 befestigt. Die Pressenhalterung 6 hat eine obere Querstange 8 aus rundem Stahlrohr für das Anhängen einer Presse 9 zum Ausdrücken von Nasswischmops u.dgl. Im Abstand darunter hat die Pressenhalterung 6 eine untere Querstange 10 aus vierkantigem Stahlrohr. Die jeweiligen Enden der Querstangen 8, 10 sind an ein Verbindungsstück 11 angeschweisst. Die Verbindungsstücke 11 bestehen aus Flacheisenmaterial und sind mit Löchern 12 im Abstand zweier benachbarter Querstreben 13 ausgestattet, so dass jedes Verbindungsstück 11 über zwei Schrauben mit benachbarten Querstreben 13 verschraubt werden kann.

## Patentansprüche

1. Reinigungswagen mit einem z.B. mit Lenkrollen (2) versehenen Rahmengestell (3) mit zwei im Abstand voneinander angeordneten Holmen (4) für daran auswechselbar zu befestigende Stütz- oder Tragteile (5), wie Drahtkörbe, Bügel, Roste, Halterahmen u.dgl., mit einer Pressenhalterung (6) zwischen den beiden Holmen (4), die oberhalb eines für die Aufnahme von wenigstens einem Eimer (7) bestimmten Halterahmens (14) angeordnet ist, sowie mit einer die beiden Holme (4) verbindenden oberen Querstange (8), vorzugsweise aus rundem Stahlrohr, für das Einhängen der Presse (9) und einer die beiden Holme (4) verbindenden unteren Querstange (10) als Gegenlager für die Abstützung der Presse (9), dadurch gekennzeichnet, dass die Holme (4) im wesentlichen senkrecht angeordnet und U-förmig mit nach oben weisender Krümmung ausgebildet sind und dass die Schenkel der Holme (4) jeweils in Abständen durch Querstreben (13) miteinander verbunden sind.

2. Reinigungswagen nach Anspruch 1, dadurch gekennzeichnet, dass die untere Querstange (10) aus vierkantigem Stahlrohr besteht.

3. Reinigungswagen nach Anspruch 1 oder 2, dadurch gekennzeichnet, dass die einander zugeordneten Enden der Querstangen (8, 10) im Abstand voneinander jeweils an einem gemeinsamen, vorzugsweise als Flachmaterialstreifen ausgebildeten Verbindungsstück (11) angebracht, vorzugsweise angeschweisst, sind.

4. Reinigungswagen nach Anspruch 3, dadurch gekennzeichnet, dass das jeweilige Verbindungsstück (11) Löcher (12) für das Festschrauben an den Holmen (4) bzw. an den mit diesen verbundenen Querstreben (13) aufweist.

5. Reinigungswagen nach Anspruch 4, dadurch gekennzeichnet, dass in den jeweiligen Verbindungsstücken (11) wenigstens zwei Löcher (12) im Abstand von Querstreben (13) der Holme (4) vorgesehen sind.

**Claims**

1. Cleaning vehicle with a frame (3), provided e.g. with steering rollers (2), with two bars (4) spaced from one another for supporting or carrying elements (5) like wire crates, brackets, grates, supporting frames and the like to be exchangeably fastened thereto, with a press holder (6) between the two bars (4) placed above a supporting frame (14) intended to hold at least one bucket (7), as well as with an upper cross bar (8), preferably of tubular steel, connecting the two bars (4), for suspension of the press (9), and a lower cross bar (10) connecting the two bars (4) as a lower end support for the press (9), characterized in that the bars (4) are arranged essentially in vertical direction and are of U shape with the curvature showing upwards and that the respective legs of the bars (4) are connected with one another by cross ties (13) spaced from one another.

2. Cleaning vehicle according to claim 1, characterized in that the lower cross bar (10) consists of square steel tubing.

3. Cleaning vehicle according to claim 1 or 2, characterized in that the ends coordinated with one another of the cross bars (8, 10) are attached, preferably welded, spaced from one another, to a mutual connecting piece (11) preferably formed as a strip of flat material.

4. Cleaning vehicle according to claim 3, characterized in that the respective connecting piece (11) is provided with holes (12) for being screwed to the bars (4) and the cross ties (13) connected therewith, respectively.

5. Cleaning vehicle according to claim 4, characterized in that the respective connecting pieces (11) are provided with at least two holes (12) spaced from the cross ties (13) of the bars (4).

**Revendications**

1. Chariot de nettoyage avec un bâti (3), pourvu par exemple de galets-guide (2), avec deux montants (4) écartés l'un de l'autre pour l'attachement de manière échangeable de pièces de soutènement ou de support (5) comme des corbeilles métalliques, seaux, brides, grilles, cadres d'attache et autres, avec un porte-presse (6) entre les deux montants (4) disposé au-dessus d'un cadre supporteur (14) destiné à tenir au moins un seau (7) ainsi qu'une traverse supérieure (8), de préférence en tube d'acier rond, liant les deux montants (4), pour l'accrochage de la presse (9) et une traverse inférieure (19) liant les deux montants (4), servant de butée pour la presse (9), caractérisé en ce que les montants (4) sont disposés essentiellement en direction verticale, et de forme U avec la courbure montrant vers le haut et que les jambes respectives des montants (4) sont liées entre eux par des étresillons (13) écartés l'un de l'autre.

2. Chariot de nettoyage selon revendication 1, caractérisé en ce que la traverse inférieure (10) consiste en tube d'acier carré.

3. Chariot de nettoyage selon revendication 1 ou 2, caractérisé en ce que les bouts coordinés l'un à l'autre des traverses (8, 10) sont attachés, de préférence soudés, écartés l'un de l'autre, à une pièce de jonction (11) commune formée en bande de matière plate.

4. Chariot de nettoyage selon revendication 3, caractérisé en ce que la pièce de jonction (11) respective est pourvue de trous (12) pour être vissée aux montants (4) respectivement aux étresillons (13) liés avec ceux-ci.

5. Chariot de nettoyage selon revendication 4, caractérisé en ce que chaque pièce de jonction (11) est pourvue au moins de deux trous (12) placés à l'écart d'étresillons (13) des montants (4).